Europäisches Patentamt

(19) European Patent Office

Office européen des brevets

(11) Publication number: **0 051 949**
**B1**

(12) **EUROPEAN PATENT SPECIFICATION**

(45) Date of publication of patent specification: **04.03.87**

(51) Int. Cl.⁴: **A 61 C 15/00, A 46 B 15/00**

(21) Application number: **81305036.6**

(22) Date of filing: **26.10.81**

(54) **Plaque remover.**

(30) Priority: **11.11.80 GB 8036195**

(43) Date of publication of application:
**19.05.82 Bulletin 82/20**

(45) Publication of the grant of the patent:
**04.03.87 Bulletin 87/10**

(84) Designated Contracting States:
**CH DE FR GB IT LI**

(56) References cited:
**EP-A-0 012 228
CH-A- 99 875
DE-U-1 775 702
DE-U-7 710 301
GB-A-1 464 893
US-A-1 327 477
US-A-1 468 125
US-A-1 784 986
US-A-1 796 367**

(73) Proprietor: **UNISPLAY S.A.
25 Grand Rue
Geneva (CH)**

(72) Inventor: **Salam, Hassan Paddy Abdel
80 Vicarage Court
London, W8 4HG (GB)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

This invention relates to an instrument for cleaning teeth and in particular for removing dental plaque and tartar therefrom.

The toothbrush is the most widely used instrument for cleaning teeth, but there are certain areas of the teeth that it does not clean properly. These are at the gaps between the teeth and the surfaces of the teeth close to the gum line where there is a shallow pocket formed by the junction of the gum and tooth. Plaque tends to accumulate in these areas providing a bacteriological environment which irritates the gum and attacks the tooth, leading to caries. Irritated gums can become swollen, causing a deeper pocket between gum and tooth to form which in turn results in more plaque accumulated. This latter situation is very difficult to correct with a toothbrush as it cannot reach into the pocket and also at this stage the gum is sore and liable to bleed. Problems of gum inflammation are particularly prevalent in older people and are a major cause of loss of teeth.

Dental floss is used as a plaque remover but it has limitations and disadvantages. Its main use is to remove plaque accumulating in the gaps between the teeth using a shaving or scaling action with the floss slid into the intertooth gap, tensioned and pulled along the side of the tooth starting from the gum line in the direction away from it. If there is no gap between the crowns of the two teeth, the floss cannot easily be slipped in. It can be forced in, but there is the danger in doing so of injuring the gum. Dental floss cannot deal with the gum line pockets on the sides of the teeth facing the tongue and the cheek.

Another problem that can cause loss of teeth is accumulation of tartar round the tooth close to the gum line. Tartar tends to be hard, and brushes and dental floss are not suited to removing it. It needs to be gently chiselled off, and none of the instruments available to the general public provides this function.

US Patent 1796367 (Grove) describes a toothbrush with a socket at the end of its handle into which can be pressed either of two instruments. Each of these instruments in its preferred form is made out of a solid piece of orange wood and each has parallel sides and is tapered in thickness like a wedge. One of these is for cleaning subgingival spaces, and the other is for cleaning the exposed surfaces of the teeth using abrasive powder and a polishing action. Depending on the cleaning operation the tools need to be interchanged.

US Patent 1468125 (Nielsen) illustrates a boat shaped instrument for cleaning teeth. One end of the instrument is sharp pointed and designed for passing between adjacent teeth. The other end of the instrument includes a scraper with a wide angled point having an angle greater than 60 degrees in the form of a boat. To clean the backs of the teeth the whole instrument must be placed in the mouth.

Swiss Patent 99875 (Blechschmid) illustrates four instruments for cleaning teeth made out of sheet material and also two further sharp pointed instruments made of round rod. The instruments comprise a toothpick handle with a hook extending at right angles from the handle. Four of the hooks described are flat elements which taper to a point, and two of the hooks are solid spikes of generally circular cross-section.

Broadly stated the invention provides an instrument for removing plaque from natural teeth comprising an elongate handle (1) with a device provided at an end of said handle and projecting away from said handle at an angle relative to the longitudinal axis of said handle, the dimension of said device in said projecting direction being such that it facilitates placement of said device in the mouth to reach the exposed surfaces of all the teeth, said device comprising a blade (3) of flexible sheet like material tapering in width from a base portion to an apex, and means more rigid than said blade provided at said base portion, said blade being arranged both to pass into gaps between the teeth and to scrape plaque off the exposed surface of the teeth, characterised in that said blade is stiffened by having a fold forming a valley (7) extending along the direction from said base portion to said apex, said blade being pliant compared with said handle, said pliancy enabling a portion of said blade to unfold temporarily to pass into said gaps and to recover, said means more rigid than said blade maintaining said fold at said base portion, said blade being arranged to resist buckling when subjected to forces in the direction on to its concave side and normal to its surface arising from scraping.

In a preferred aspect of the invention the angle at the apex of the blade of points on the two opposed edges of the blade each 7 millimetres from the apex of the blade is greater than 15 degrees and also the blade is at least 0.15 mm wide at a distance 0.1 mm behind its apex. With this combination of dimensional features the blade is less sharply tapering than is normal in a conventional toothpick which is made long and pointed so as to be pushed longitudinally and penetrate between pairs of teeth and it ends in a blunt broad and preferably radiused end that is less likely to puncture the gum if abused.

The instrument is best used after brushing in the normal way, and in an embodiment of the invention it is part of a toothbrush. This is for convenience and to encourage the user to do both brushing and scaling when cleaning the teeth. A few strokes with the plaque remover after brushing shows a significant amount of plaque on it and this indication makes the user appreciate that brushing alone is inadequate and provides an incentive for proceeding with scaling.

In another embodiment the instrument is mounted on a base to form a replaceable unit that fits on a handle which is easy to handle and is not easily broken or swallowed.

Embodiments of the invention will now be described, by way of example only, with reference to the accompanying drawings, in which:

Figure 1 is a perspective view of a combined toothbrush and plaque remover;

Figure 2 is a side view of the plaque removing end of the toothbrush;

Figure 3 is a view on an enlarged scale of the tip of the plaque removing blade in a flattened state;

Figure 4 is a view of the plaque removing end of the toothbrush scraping plaque off molar teeth;

Figure 5 is a view of the tip of the plaque removing blade on a further enlarged scale;

Figure 6 illustrates a further manner of using the plaque removing end of the toothbrush;

Figure 7 is a view of an edge of the blade in section on an enlarged scale;

Figure 8 shows a further embodiment in which the blade is provided in a demountable support that fits on the end of a toothbrush handle;

Figure 9 shows a second embodiment of a blade on a demountable support;

Figure 10 shows in cross-section part of a tooth and gum with the tip of a blade according to the invention removing plaque from a gum pocket; and

Figure 11 is a view of a double ended plaque removing device.

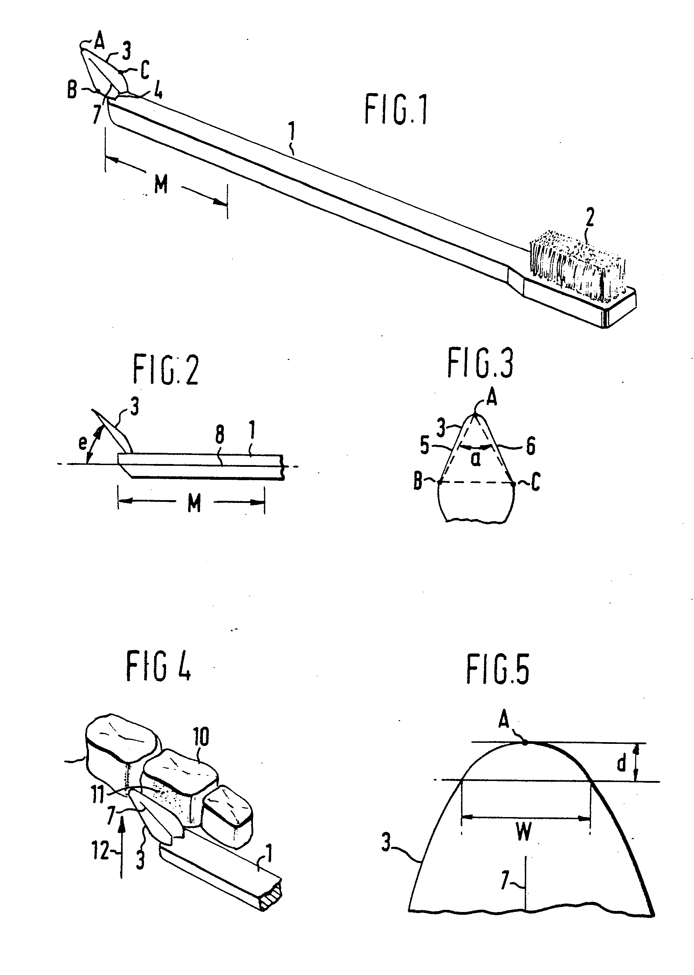

In Figure 1, a tooth cleaning instrument consists of an elongate member 1 with a brush 2 at one end and a plaque remover 3 at the other. Plaque remover 3 comprises a blade of folded flexible non-toxic sheet-like plastics material arranged to remove plaque by a scraping or shaving action. A portion M of elongate member 1 of about four centimetres in length can be inserted in the mouth so that plaque remover 3 can be inserted in the mouth to reach the back teeth. This portion need not necessarily be parallel to the remainder member 1. Plaque remover 3 can be integral with member 1 or a separate part that is fitted to it.

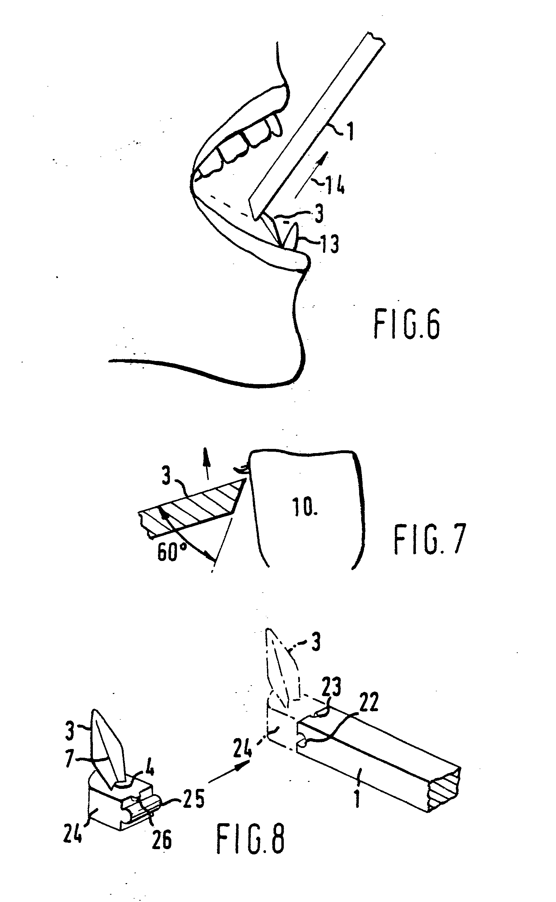

Figure 3 shows the shape of the blade when flattened. It has a blunt tip ending at a point "A" and two sides 5 and 6. Figure 4 illustrates one mode of using the implement in which a side of blade 3 is used to shave plaque 11 off tooth 10 by moving it from the gum line in the direction of arrow 12 away from the gum. Alternatively the tip "A" of blade 3 can be used to shave or scoop off plaque from sides of the teeth.

Figure 6 shows how the plaque remover can be used to remove plaque or tartar from the back of a lower incisor 13. The implement is moved in the direction of arrow 14 causing plaque and tartar to be chiselled off. The shaving action applies pressure to the edge of the blade normal to its surface tending to buckle the blade. To prevent such buckling at least part of the blade must be sufficiently broad and the blade must be curved or folded in this part.

Referring to Figure 3 "B" and "C" are points on sides 5 and 6 respectively each 7 mm away from tip point "A". To prevent the angle "a" of triangle BAC must exceed 15 degrees, and is preferably between 30 and 50 degrees. The portion BC is made wider than the base of the blade so that the edges of the blade near points B and C protrude out sideways enabling the lateral mid-regions of the blade also to be conveniently used for shaving.

In Figure 1 the blade 3 is shown folded about a central base-apex line 7. The fold extends into the portion of the blade between BC and the tip and is preferably continued right up to or close to the tip. The fold is permanently maintained in the blade by means more rigid than the portion between BC and the tip. In the embodiment in Figure 1 the fold is permanently maintained by extending it in that portion of the blade that joins with member 1, as indicated by interface line 4. It is preferable to have the blade folded with a small radius less than 0.5 mm, or abruptly as shown at 7, rather than have it curved uniformly from B to C, so as to provide maximum resistance to bending and buckling of the line of material from the centre of the base to the apex.

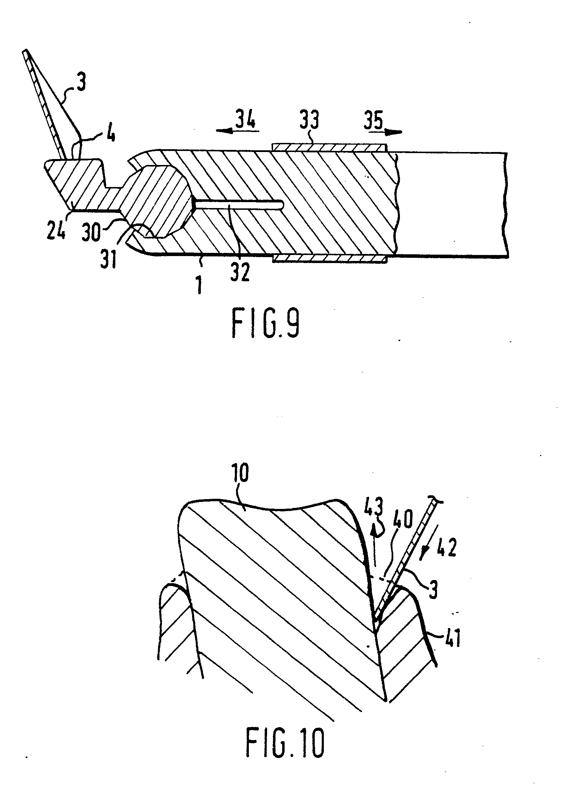

The mean thickness of the blade portion from line BC up to the tip "A" is between 0.12 and 0.35 mm, with 0.12 to 0.25 preferred, as this gives good stiffness without preventing the tip of the blade from unfolding temporarily when slipped into gaps between the teeth that are as narrow as 0.3 mm or thereabouts. The thickness of the blade can be less at the tip and at edges 5 and 6 than it is at the centre of triangle BAC to facilitate insertion into narrow gaps. If desired the edges of the blade may be formed so as to present an acute-angled chiselling edge to the tooth surface as shown in the cross-sectional view of the blade in Figure 7 to enhance the shaving action. The plaque remover 3 can be made as an integral part of handle 1 by injection moulding.

Any appropriate blade material may be used, but it is desirable to select a material which is appropriately durable and is not as hard as tooth enamel so as to minimise cumulative wear damage to the tooth surface and has low moisture absorption. The blade can be of a polyester, preferably polyester based on polyethylene terephthalate.

Figure 2 shows a side view of the instrument. Blade 3 is set at an axillary angle "e" relative to the longitudinal axis 8 of portion M. This angle is greater than 25 degrees and preferably between 35 and 85 degrees.

The tip of the blade is made blunt in profile to avoid injury to the gums, and it is advantageous to make it wide so that it can remove more plaque and tartar per stroke.

Figure 5 shows the tip of a blade. For the purposes of this invention the tip is blunt if the width W of the blade at a distance d = 0.1 mm in from the extremity of the tip towards the support of the blade is greater than 0.15 mm. For implements for use by adults W is preferably between 0.3 and 0.8 mm and for those for use by children W is preferably between 0.6 and 1.2 mm.

As illustrated in Figure 10, the blunt tip or a portion of the blade 3 a little to the side of it can be used to gently spoon plaque and food debris 40 out of a pocket formed between a tooth 10 and adjacent swollen gum. The blade is inserted into the pocket in direction 42 to press against the side of the tooth and then moved away from the gum in the direction of arrow 43 to spoon out the unwanted matter and scrape the side of the tooth clean.

The instrument in Figure 1 can be manufactured in two parts, one comprising the plaque remover and the other the brush. The two can be joined permanently or in a way that allows separation so that the plaque remover or the brush can be replaced.

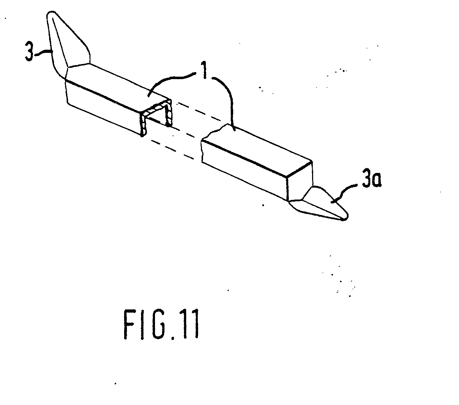

Figure 8 shows an embodiment of the invention in which blade 3 is part of a replaceable blade-module 24 which can be inserted into and removed from an end of handle 1 the other end of which preferably includes a brush. Blade-module 24 includes a tongue portion 25 which fits into a corresponding groove 22 in handle 1. It also includes a small protrusion 26 which snaps into a corresponding small cavity 23 in handle 1 to keep the blade-module 24 securely attached to the handle when fitted to it. The blade-module can be made of plastics material. The other end of the handle could be arranged to receive another blade module where the blade is directed at a different angle as described below with reference to Figure 11.

Figure 9 shows a sectional view of another embodiment using a replaceable blade-module 24 including a plaque shaving blade 3 and a ball portion 30 having multiple planar facets which fits into a corresponding multifaceted spherical socket 31 in handle 1. Blade-module 24 can be rotated about 3 axes to provide adjustment of the angle of the blade relative to the handle. A tubular collar 33 around the handle is provided which can be moved towards the ball and socket arrangement, which is arranged when the collar is over it to be locked so that the blade position does not alter inadvertently. Handle 1 is bifurcated at 32 to allow replacement of blade-module 24 when collar 33 is withdrawn in direction 35. The other end of the handle not shown can include a brush.

Figure 11 shows a disposable plaque and tartar remover according to the invention. It includes a handle 1 with a hollow structure that is open underneath. A first plaque removing blade 3 is fixed to one end of the handle and is set at an angle relative to the longitudinal axis of the handle as previously described. A second plaque removing blade 3a roughly in line with the axis of the handle is fixed at the other end. The handle and the two blades may be moulded together as one piece. Blade 3a can be used for scraping the outer sides of the front teeth and preferably has the same design characteristics as blade 3, to provide the desired stiffness, safety and shaving efficiency.

The construction of blade 3 and its support at its base for the embodiments in Figures 8, 9 and 11 is the same as was described in relation to Figures 1, 2, 3, 5 and 7.

For all embodiments the blade is preferably arranged to have an appearance other than white, so that plaque accumulating on it can be seen easily. The blade can be transparent and colourless for this purpose.

Various modifications may be made to the embodiment shown without departing from the invention, the scope of which is defined in the appended claims. For example, the instrument can be made simply as a plaque remover without the brush, or with the brush replaced with a different type of tooth cleaner.

**Claims**

1. An instrument for removing plaque from natural teeth comprising an elongate handle (1) with a device provided at an end of said handle and projecting away from said handle at an angle relative to the longitudinal axis of said handle, the dimension of said device in said projecting direction being such that it facilitates placement of said device in the mouth to reach the exposed surfaces of all the teeth, said device comprising a blade (3) of flexible sheet-like material tapering in width from a base portion to an apex, and means more rigid than said blade provided at said base portion, said blade being arranged both to pass into gaps between the teeth and to scrape plaque off the exposed surface of the teeth, characterised in that said blade is stiffened by having a fold forming a valley (7) extending along the direction from said base portion to said apex, said blade being pliant compared with said handle, said pliancy enabling a portion of said blade to unfold temporarily to pass into said gaps and to recover, said means more rigid than said blade maintaining said fold at said base portion, said blade being arranged to resist buckling when subjected to forces in the direction on to its concave side and normal to its surface arising from scraping.

2. An instrument according to claim 1 arranged to indicate removed plaque distinctly.

3. An instrument according to claim 1 or claim 2 wherein said blade (3) is of polyester.

4. An instrument according to any preceding claim including a handle (1) an end of which is formed as a toothbrush.

5. An instrument according to any preceding claim wherein said blade (3) is colourless and transparent.

6. An instrument according to claim 1 or 4 arranged to be safe for general use by children as well as adults wherein said blade is attached to a member (24) arranged to replaceably fit onto said handle (1) said member (24) being more bulky than said blade (3) and said blade (3) being blunt at said apex.

7. An instrument according to any of claims 1 to 5, wherein said device further comprises a member to which said blade (3) is attached said member being arranged to replaceably fit at an end of said handle (1).

8. A device according to claim 7 wherein said apex of said blade (3) is blunt for safety and to assist in the removal of plaque by said apex.

9. A device according to claim 7 wherein said blade (3) flares out in width from a part of it that is secured to said member before narrowing in width towards said apex.

10. A device according to any of claims 7 to 9 arranged to fit onto a handle (1) with said blade (3) projecting away from the axis of said handle (1) at an angle exceeding 25 degrees.

11. A device according to claim 10 wherein said branching angle can be adjusted by the user.

12. A device according to any preceding claim, wherein said blade is of mean thickness between 0.12 and 0.35 mm.

13. A device according to claim 12 wherein the mean thickness of said blade is between 0.12 and 0.25 mm.

## Patentansprüche

1. Instrument zum Entfernen von Belag von natürlichen Zähnen, bestehend aus einem langgestreckten Griff (1) mit einer Einrichtung, die an einem Ende des Griffes angeordnet ist und von dem Griff unter einem Winkel in bezug auf die Längsachse des Griffes vorsteht, wobei die Abmessung der Einrichtung in dieser Vorstehrichtung derart ist, daß sie das Instellungbringen der Einrichtung im Mund erleichtert, um die freien Flächen aller Zähne zu erreichen, wobei die Einrichtung ein Spatel (3) aus flexiblem, plattenartigem Material, der in der Breite von einem Basisabschnitt zu einer Spitze zusammenläuft, und eine an dem Basisabschnitt vorgesehene Einrichtung enthält, die steifer als der Spatel ist, wobei der Spatel so eingerichtet ist, daß er sowohl in die Zwischenräume zwischen den Zähnen eindringen kann als auch Belag von der freien Oberfläche der Zähne abkratzen kann, dadurch gekennzeichnet, daß der Spatel dadurch versteift ist, daß er eine Falte aufweist, die eine Kehle (7) ausbildet, die sich längs der Richtung von dem Basisabschnitt zur Spitze erstreckt, wobei der Spatel im Vergleich zum Griff biegbar ist, wobei diese Biegbarkeit es ermöglicht, daß ein Teil des Spatels sich vorübergehend ausfaltet, um in die genannten Zwischenräume einzudringen und seine ursprüngliche Gestalt wieder anzunehmen, wobei die Einrichtung, die steifer als der Spatel ist, die genannte Falte am Basisabschnitt aufrechterhält und die Klinge dazu eingerichtet ist, einem Umknicken zu widerstehen, wenn sie Kräften in der Richtung auf ihre konkave Seite und senkrecht zu ihrer Oberfläche unterworfen ist, die von Kratzen herrühren.

2. Instrument nach Anspruch 1, das dazu eingerichtet ist, entfernten Belag deutlich anzuzeigen.

3. Instrument nach Anspruch 1 oder 2, bei dem der Spatel (3) aus Polyester besteht.

4. Instrument nach einem der vorhergehenden Ansprüche, enthaltend einen Griff (1), von dem ein Ende als eine Zahnbürste ausgebildet ist.

5. Instrument nach einem der vorhergehenden Ansprüche, bei dem der Spatel (3) farblos und transparent ist.

6. Instrument nach Anspruch 1 oder 4, das so gestaltet ist, daß es für den allgemeinen Gebrauch sowohl durch Kinder als auch durch Erwachsene geeignet ist, wobei der Spatel an einem Bauelement (24) befestigt ist, das dazu eingerichtet ist, abnehmbar an dem Griff (1) befestigt zu werden, wobei das genannte Bauelement (24) sperriger als der Spatel (3) ist und der Spatel (3) an der Spitze abgestumpft ist.

7. Instrument nach einem der Ansprüche 1 bis 5, bei dem die Einrichtung weiterhin ein Bauelement enthält, an welchem der Spatel (3) befestigt ist, wobei das Bauelement dazu eingerichtet ist, austauschbar an einem Ende des Griffes (1) befestigt zu werden.

8. Einrichtung nach Anspruch 7, bei der die Spitze der Klinge (3) aus Sicherheitsgründen abgestumpft ist und um die Entfernung von Belag die Spitze zu unterstützen.

9. Einrichtung nach Anspruch 7, bei der Spatel (3) sich in der Breite von einem Abschnitt desselben verbreitert, der an dem Bauelement befestigt ist, bevor er in der Breite gegen die Spitze zu schmaler wird.

10. Einrichtung nach einem der Ansprüche 7 bis 9, die dazu eingerichtet ist, an einem Griff (1) angebracht zu werden, wobei der Spatel (3) von der Achse des Griffs (1) unter einem Winkel von mehr als 25° absteht.

11. Einrichtung nach Anspruch 10, bei der der Abstehwinkel vom Benutzer eingestellt werden kann.

12. Einrichtung nach einem der vorhergehenden Ansprüche, bei der der Spatel eine mittlere Dicke zwischen 0,12 und 0,35 mm aufweist.

13. Einrichtung nach Anspruch 12, bei der die mittlere Dicke des Spatels zwischen 0,12 und 0,25 mm liegt.

## Revendications

1. Instrument pour enlever les plaques hors des dents naturelles, comportant une poignée de forme allongée (1) avec un dispositif prévu à une extrémité de ladite poignée et dépassant hors de ladite poignée sous un certain angle par rapport à l'axe longitudinal de ladite poignée, la dimension dudit dispositif dans ladite direction de dépassement étant telle qu'elle facilite la mise en place dudit dispositif dans la bouche pour atteindre les surfaces exposées de toutes les dents, ledit dispositif comportant une lame (3) d'un matériau souple du type feuille, dont la largeur va en diminuant depuis une portion de base jusqu'a un sommet, ainsi qu'un moyen plus rigide que ladite lame prévu à ladite portion de base, ladite lame étant disposée à la fois pour passer dans les insterstices entre les dents et pour râcler les plaques hors des surfaces exposées des dents, caractérisé en ce que ladite lame est raidie du fait qu'elle présente un pli qui forme un creux (7) qui s'étend selon la direction allant de ladite portion de base vers ledit sommet, ladite lame étant souple en comparaison de ladite poignée, ladite souplesse permettant à une portion de ladite lame de se déplier temporairement pour passer dans lesdits interstices et reprendre ensuite sa

**0 051 949**

forme, ledit moyen plus rigide que ladite lame maintenant ledit pli à ladite portion de base, ladite lame étant prévue pour résister au gauchissement lorsqu'elle est soumise à des forces, dirigées vers sa face concave et normales à sa surface, provenant du râclage.

2. Instrument selon la revendication 1, prévu pour faire apparaitre distinctement les plaques enlevées.

3. Instrument selon la revendication 1 ou la revendication 2, dans lequel ladite lame (3) est en polyester.

4. Instrument selon l'une quelconque des revendications précédentes, comprenant une poignée (1) dont une extrémité a la forme d'une brosse à dents.

5. Instrument selon l'une quelconque des revendications précédentes, dans lequel ladite lame (3) est incolore et transparente.

6. Instrument selon la revendication 1 ou 4, prévu pour être d'un emploi sûr lorsqu'il est utilisé de façon générale par des enfants aussi bien que par des adultes, étant précisé que ladite lame est fixée à une pièce (24) prévue pour se monter, avec possibilité de remplacement, sur ladite poignée (1), ladite pièce (24) étant plus massive que ladite lame (3) et ladite lame (3) étant émoussée audit sommet.

7. Instrument selon l'une quelconque des revendications 1 à 5, dans lequel ledit dispositif comporte en outre une pièce à laquelle ladite lame (3) est fixée, ladite pièce étant employée pour se monter, avec possibilité de remplacement, à une extrémité de ladite poignée (1).

8. Dispositif selon la revendication 7, dans lequel ledit sommet de ladite lame (3) est émoussé aux fins de sécurité et pour aider à l'enlèvement des plaques par ledit sommet.

9. Dispositif selon la revendication 7, dans lequel ladite lame (3) s'enfle en largeur depuis sa partie qui est fixée à ladite pièce avant de se rétrécir en largeur en allant vers ledit sommet.

10. Dispositif selon l'une quelconque des revendications 7 à 9, prévu pour se monter sur une poignée (1), ladite lame (3) débordant hors de l'axe de ladite poignée (1) sous un angle dépassant 25 degrès.

11. Dispositif selon la revendication 10, dans lequel l'utilisateur peut régler ledit angle de branchement.

12. Dispositif selon l'une quelconque des revendications précédentes, dans lequel ladite lame est d'une épaisseur moyenne comprise entre 0.12 et 0.35 mm.

13. Dispositif selon la revendication 12, dans lequel l'épaisseur moyenne de ladite lame est comprise entre 0.12 et 0.25 mm.

FIG.1

FIG.2

FIG.3

FIG 4

FIG.5

FIG.6

FIG.7

FIG.8

FIG.9

FIG.10

FIG.11